# EUROPÄISCHE PATENTANMELDUNG

(11) **EP 1 193 473 A2**
(43) Veröffentlichungstag der Anmeldung: **03.04.2002**
(21) Anmeldenummer: 01121231.3
(22) Anmeldetag: 05.09.2001
(51) Int. Cl.: G01F 1/58

(54) **Magnetische Strömungsmesseinrichtung**

(30) Priorität: 28.09.2000 DE 10048109
(71) Anmelder: SMS Demag AG, 40237 Düsseldorf (DE)
(72) Erfinder: Jung, Wolfram, 57080 Siegen (DE); Horbach, Ulrich, 41468 Neuss (DE); von Wyl, Horst, 47169 Duisburg (DE)
(74) Vertreter: Valentin, Ekkehard, Dipl.-Ing.

(57) **Zusammenfassung**

Bei einem Verfahren zum Betreiben einer Meßeinrichtung zur Ermittlung der Strömung einer Metallschmelze in einer Kokille einer Stranggießanlage, umfassend an einer Stranggießkokillenwand angeordnete Magnete, werden mindestens zwei in Strömungsrichtung der Metallschmelze im Abstand voneinander angeordnete fremderregte Elektromagnete mit unterschiedlicher Feldstärke erregt, wobei die jeweiligen magnetischen Rückwirkungen einer Auswerteeinheit zugeführt werden, in der unter Differenzbildung die prozeßabhängigen Meßdaten ermittelt werden.

## Beschreibung

Die Erfindung betrifft ein Verfahren und eine Vorrichtung zum Betreiben einer Meßeinrichtung zur Ermittlung der Strömung einer Metallschmelze in einer Kokille einer Stranggießanlage, umfassend an einer Stranggießkokillenwand angeordnete Magnete.

Im Stand der Technik sind solche Meßeinrichtungen in den verschiedensten Ausführungsformen bekannt, die zur berührungslosen Erfassung der Geschwindigkeiten und Strömungsrichtungen elektrisch leitfähiger flüssiger Medien mit Komponenten ausgebildet sind, die ein magnetisches Wechselfeld respektive ein magnetisches Gleichfeld erzeugen. Abgesehen von den allgemein bekannten Einrichtungen zum Messen der lokalen Strömungsgeschwindigkeit, z.B. eines flüssigen Stahles in einer Kokille, ist aus der DE 43 16 344 A1 eine Strömungsmeßeinrichtung bekannt, bei der mittels Permanentmagneten ein Magnetfeld durch ein elektrisch leitfähiges Material in einem elektrisch leitfähigen Medium erzeugt wird.

Für diese bekannte Strömungsmeßeinrichtung wird als wesentlicher Vorteil geltend gemacht, daß sich die Strömungsgeschwindigkeiten und/oder -richtungen von elektrisch leitfähigen flüssigen Medien selbst dann genau erfassen lassen, wenn zwischen der Strömungseinrichtung und dem Medium elektrisch leitfähige Bauteile angeordnet sind. Diesem Vorteil steht als bedeutsamer Nachteil gegenüber, daß sich nicht feststellen läßt, ob eine beispielsweise schwache Strömung in der Nähe der Magnetfeld messenden Komponente oder eine beispielsweise starke Strömung in größerer Entfernung vorliegt, da die magnetische Feldstärke mit dem Quadrat der Entfernung abnimmt. Die erzeugte magnetische Intensität und deren meßbare magnetische Rückwirkung steht in direkter Abhängigkeit von der Entfernung zu der das Magnetfeld erzeugenden Komponente. Wenn beispielsweise in der Mitte einer Stranggießkokille eine starke Abwärtsströmung der Metallschmelze und am Kokillenrand eine schwache Aufwärtsströmung vorherrscht, so würden daraus ableitbare Strömungsvektoren an der Meßeinrichtung als Signale gleicher Intensität mit umgekehrten Vorzeichen auftreten und sich damit aufheben. Es würde als Strömung der Wert "Null" gemessen, der als solcher in weitergehenden Steuerungs- und/oder Regeleinrichtungen zur Prozeßbeeinflussung quantitativ nicht verwertbar ist.

Aufgrund der bei einem Stranggießprozeß zwangsläufigen Abwärtsbewegung der elektrisch leitfähigen Strangschale und zudem einer Oszillationsbewegung der elektrisch leitfähigen Kokille wird das induzierte Magnetfeld in seiner Größe und in seiner Richtung beeinflußt, was zur Folge hat, daß ein weiteres, verfälschtes Signal der Meßeinrichtung zugeführt und in dieser verarbeitet wird.

Der Erfindung liegt die Aufgabe zugrunde, ein gattungsgemäßes Strömungsmeßverfahren und eine Vorrichtung zur Durchführung des Verfahrens ohne die eingangs genannten Nachteile zu schaffen.

Diese Aufgabe wird für ein Verfahren erfindunggemäß dadurch gelöst, daß mindestens zwei in Strömungsrichtung der Metallschmelze im Abstand voneinander angeordnete fremderregte Elektromagneten mit unterschiedlicher Feldstärke erregt werden, wobei die jeweiligen magnetischen Rückwirkungen einer Auswerteeinheit zugeführt werden, in der unter Differenzbildung die prozeßabhängigen Meßdaten ermittelt werden. Indem fremderregte Magnete zur Erzeugung eines Magnetfeldes verwendet werden, läßt sich die Feldstärke des Magnetfeldes der einzelnen Magnete abweichend voneinander variieren und damit die Möglichkeit schaffen, durch den Vergleich von Meßergebnissen unterschiedlicher Magnetfeldstärke, welche aus den jeweiligen magnetischen Rückwirkungen resultieren, die lokale Strömung abzuleiten. Die solchermaßen ermittelte Strömung wird sodann als Meßsignal einer oder mehreren Auslese- und/oder Auswerte- und/oder Verstärkungseinheiten zugeführt und mit darin abgelegten bzw. aktuell abgefragten Gießprozeßparametern verglichen. Somit lassen sich gießprozeßrelevante Meßdaten exakt bestimmen und daraus resultierend der Gießprozeß steuerungs- und/oder regelungstechnisch qualitativ respektive quantitativ beeinflussen.

Dadurch, daß mit den Elektromagneten unterschiedliche Feldstärken erzeugt werden, kann für beliebig vorwählbare Meßtiefen - darunter sind die meßbaren elektromagnetischen Rückwirkungen der induzierten Wirbelströme ausgehend von den Polschuhen der Magnete bis zu einem definierten Punkt'in der elektrisch leitfähigen Metallschmelze zu verstehen - die in diesem Bereich jeweils vorherrschende Strömung bestimmt werden.

Gemäß einer Ausgestaltung sieht das Verfahren vor, daß mit beliebig differierenden Feldstärken die meßbare Feldlinientiefe und damit die in verschiedenen Meßtiefen jeweils unterschiedlich vorherrschende Strömung unter Ausschluß der in der Strangschale bzw. in der Kokillenwand induzierten Wirbelströme bestimmt wird. Zur Erzeugung einer unterschiedlichen magnetischen Durchflutung werden zwei Elektromagnete, wovon der eine in der Nähe des Kokilleneinlaufes und der anderen in der Nähe des Kokillenauslaufes angeordnet ist, mit unterschiedlichen Feldstärken erregt. Die entsprechend unterschiedlichen magnetischen Rückwirkungen werden dabei von zwei getrennten Meßeinrichtungen erfaßt, die jeweils an einem bzw. in der Nähe eines Elektromagneten angeordnet und mit diesem zu jeweils einem Magnetkopf zusammengefaßt sind

Durch das somit erreichte Differenz-Meßverfahren kann z.B. einerseits die mittlere Strömung der Metallschmelze über die gesamte Breite innerhalb der Kokille, nämlich zwischen einen dem Magnetköpfen am nächsten liegenden lokalen Meßpunkt und einem von den Magnetköpfen am weitesten entfernten lokalen Meßpunkt bestimmt werden. Andererseits ermöglichen andere, nämlich gestaffelte Differenzmessungen eine Bestimmung der mittleren Strömung der Metallschmelze zwischen aufeinanderfolgenden oder über die Breite verteilten Meßpunkten. Durch eine entsprechend höhere Anzahl von Differenzmessungen kann die Abstufung der Meßbereiche und somit auch der Meßtiefen für die mittlere Strömung beliebig eng gewählt werden.

Eine weitere Ausgestaltung des erfindungsgemäßen Verfahrens sieht vor, daß die Erregung des oberen Elektromagneten soweit verringert wird, bis nur noch eine Strömungsgeschwindigkeit gemessen wird, die gleich der Gießgeschwindigkeit ist. Durch den Abgleich der aktuellen Gießgeschwindigkeit mit der meßtechnisch ermittelten Strömungsgeschwindigkeit läßt sich der Übergangsbereich von der flüssigen, turbulenten Metallschmelze in ihren erstarrten Zustand bestimmen. Bei entsprechender Kalibrierung des Systems, zur Steuerung und/oder Regelung des Gießprozesses, läßt sich daraus ein Maß für die Strangschale ableiten und nachfolgend durch Veränderung einzelner, bestimmter Gießparameter das gewünschte Maß für die Strangschale einstellen.

Weiterhin sieht eine Ausgestaltung des erfindungsgemäßen Verfahrens vor, daß die Erregung beider Elektromagnete verringert wird. In Abhängigkeit der für einen Gießvorgang aktuell eingestellten Gießgeschwindigkeit wird hierbei die Feldstärke zur Erregung sowohl des oberen Elektromagneten als auch des unteren Elektromagneten so weit reduziert, bis über die jeweiligen magnetischen Rückwirkungen eine Strömungsgeschwindigkeit der Metallschmelze gemessen wird, die der aktuellen Gießgeschwindigkeit in diesem Meßbereich entspricht. Der aufgrund unterschiedlicher Messungen der Strömungsgeschwindigkeit zwischen dem oberen Meßbereich der Kokille und dem unteren Meßbereich der Kokille ermittelte Differenzmeßwert ergibt ein Maß für das Strangschalenwachstum zwischen den Meßpunkten während des Gießvorganges.

Eine Vorrichtung zur Durchführung des Verfahrens sieht erfindungsgemäß vor, daß die Elektromagnete mit unterschiedlicher und veränderlicher Feldstärke erregt sind. Die Elektromagnete gleicher Baugröße werden mittels einer externen, einstellbaren Spannungsversorgung fremderregt. Somit ist es möglich, unterschiedliche Feldstärken zu erzeugen. Je nach Intensität der magnetischen Feldstärke treten die erzeugten Wirbelströme unterschiedlich stark und in unterschiedlichen Meßtiefen auf. Die daraus resultierenden, in ihrer Intensität ebenfalls unterschiedlich starken magnetischen Rückwirkungen erlauben es, für beliebig vorwählbare Meßtiefen die in diesem Bereich vorherrschende Strömung der Metallschmelze nach Größe und Richtung zu bestimmen.

Eine Ausgestaltung der Vorrichtung sieht vor, daß an jedem Elektromagnet ein Hallelement angeordnet ist. Die Hallelemente messen bzw. empfangen die elektromagnetischen Rückwirkungen und leiten diese als Signal einer entsprechenden Auslese-, Auswerte- oder Vergleichseinrichtung zu. Vorzugsweise werden die Hallelemente um 90° gedreht angeordnet, um auch horizontale oder schräg gerichtete Strömungsturbulenzen der Metallschmelze nach Größe und Richtung zu erfassen. Um die Messung bzw. den Empfang der elektromagnetischen Rückwirkung sicher zu gewährleisten, sind die Hallelemente jeweils vorkragend zwischen den Polschuhen der Elektromagnete angeordnet und befinden sich somit in der Mitte der zwischen den Polen der Magnete geschlossenen magnetischen Feldlinien. Durch diese Anordnung des Hallelementes in dem Magnet bilden das Hallelement und die Polschuhe des Magneten einen Magnetkopf.

Schließlich schlägt die Erfindung vor, daß die Elektromagnete zu einem Meßkopf zusammengefaßt sind. Die an der Außenseite einer Kokillenwand in Strömungsrichtung übereinander angeordneten Elektromagnete, die jeweils durch Integration des Hallelements zu einem separaten Magnetkopf ausgebildet sind, werden innerhalb einer Meßeinrichtung zu einem über die beiden Magnetköpfe differenziert ansteuerbaren Meßkopf zusammengefaßt. Eine solche zusammengefaßte Meßeinrichtung, unter Berücksichtigung eines gewissen Abstandes der Komponenten zueinander, ermöglicht eine einfache und zeitsparende Montage der Meßeinrichtung an der Kokillenwand sowie einheitliche Vorratshaltung.

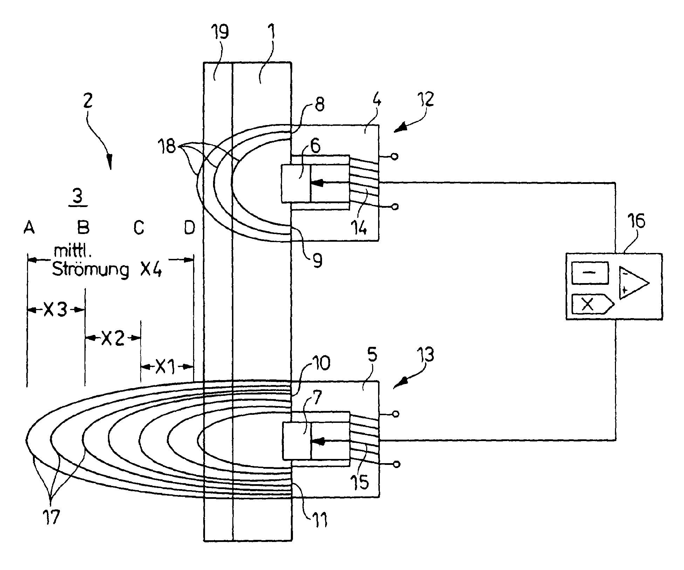

Weitere Merkmale und Vorteile der Erfindung ergeben sich aus den Ansprüchen und der nachfolgenden Beschreibung eines in der einzigen Zeichnung dargestellten Ausführungsbeispiels der Erfindung.

In der Zeichnung ist in sehr vereinfachter und schematischer Weise eine Strömungsmeßeinrichtung an einer hier nicht weiter gezeigten Kokille zum Stranggießen dargestellt. An der Kokillenwand 1 sind in Strömungsrichtung 2 einer Metallschmelze 3 zwei Elektromagnete 4, 5 gleicher Baugröße im Abstand voneinander angeordnet. Die entsprechend der magnetischen Durchflutung der Metallschmelze 3 meßbaren magnetischen Rückwirkungen der induzierten Wirbelströme werden von zwei Hallelementen 6, 7 erfaßt. Die Hallelemente 6, 7 sind jeweils zwischen den Polschuhen 8, 9 des oberen Magneten 4 und den Polschuhen 10, 11 des unteren Magneten 5, in die Kokillenwand 1 vorkragend, angeordnet. Durch die Integration der Hallelemente 6, 7 in die Magnete 3, 4 bilden die Hallelemente 6, 7 und die entsprechenden Polschuhe 8, 9 und 10, 11 jeweils einen Magnetkopf 12, 13.

Die Elektromagnete 3, 4 werden über Spulen 14, 15 fremderregt. Um für beliebig vorwählbare Meßtiefen in der Metallschmelze 3 die in diesem Bereich vorherrschende Strömung nach Größe und Richtung zu bestimmen, werden die Elektromagnete 3, 4 über die Spulen 14, 15 mit unterschiedlichen Feldstärken erregt. Dementsprechend werden mit den Elektromagneten 3, 4 unterschiedliche Feldstärken erzeugt, wodurch sich auch die meßbare Tiefe in der Metallschmelze 3 bzw. die entsprechenden magnetischen Rückwirkungen verändern.

Ein aus den jeweiligen magnetischen Rückwirkungen resultierendes Meßsignal wird über die Hallelemente 6, 7 einer Auswerteeinheit 16 zugeführt und mit in dieser abgelegten und/oder aktuell erfaßten Gießprozeßparametern verglichen. Somit lassen sich gießprozeßrelevante Meßdaten exakt bestimmen und aus den gewonnenen Ergebnissen der Gießprozeß, steuerungs- und/oder regelungstechnisch, den gewünschten Erfordernissen anpassen.

Nachfolgend wird anhand des dargestellten Beispiels die Erfassung der Meßwerte der mittleren Strömung für verschieden tiefe Meßbereiche näher erläutert.

Der untere Magnetkopf 13 wird mit maximaler Feldstärke (gleich 100%) erregt. Die hierbei meßbaren magnetischen Rückwirkungen der induzierten Wirbelströme, in Form von magnetischen Feldlinien 17, reichen von den Polschuhen 10, 11 bis zum lokalen Meßpunkt A. Demgegenüber wird der obere Magnetkopf 12 zunächst mit 25% Feldstärke erregt. Die aus den entsprechenden magnetischen Rückwirkungen resultierenden Feldlinien 18 reichen von den Polschuhen 8, 9 bis zum lokalen Meßpunkt D und sind ein Maß für die in der Strangschale 19 induzierten Wirbelströme. Zum Vergleich der Meßdaten der im Verhältnis 1 : 4 unterschiedlich erregten Magnetköpfe 12, 13 wird der vom oberen Magneten 12 gemessene Wert mit dem Faktor 4 multipliziert. Somit ist der in dem oberen Magnetbereich rechnerisch ermittelte Wert dem Ergebnis der in dem unteren Magnetbereich gemessenen Rückwirkungen von den Polschuhen 10, 11 bis zum Meßpunkt D gleichgesetzt. Eine Subtraktion dieses gerechneten Wert von dem mit dem unteren Magnetkopf 13 gemessenen Wert ergibt ein Maß für die mittlere Strömung X4 im Bereich zwischen den Punkten A und D. Durch diese Bestimmung der Strömung der Metallschmelze 3 ausschließlich im Bereich X4 läßt sich die ansonsten das Meßergebnis verfälschende Bewegung der Strangschale 19 sowie die Oszillationsbewegung der Kokille kompensieren.

Zur Messung des nächst tieferen - bezogen auf die Breite des Strangs bzw. der Kokille - Bereichs wird analog zu der vorbeschriebenen Messung danach der obere Magnetkopf 12 mit 50% Feldstärke erregt, der aus den magnetischen Rückwirkungen, bis zum Punkt C, resultierende Meßwert mit dem Faktor 2 multipliziert und dieser gerechnete Wert wiederum vom Meßwert des unteren Magnetkopfes 13 subtrahiert. Das Ergebnis entspricht dann einem Maß für die mittlere Strömung X2 zwischen den Punkten A und C. Entsprechend wird zur Bestimmung der mittleren Strömung X3 zwischen den Punkten A und B der obere Magnetkopf 12 mit 75% Feldstärke erregt, der aus der magnetischen Rückwirkung, bis Punkt B, resultierende Meßwert nach Multiplikation mit dem Faktor 1,5 vom Meßwert des unteren Magnetkopfes 13 subtrahiert. Durch eine entsprechend höhere Anzahl von Differenzmessungen mit dem oberen Magnetkopf 12 und dem unteren Magnetkopf 13 kann die Abstufung der Bereiche für die mittleren Strömungen beliebig eng gewählt werden.

Weiterhin läßt sich mit der Meßeinrichtung ein Maß für die Strangschale bestimmen. Hierzu wird die Feldstärke zur Erregung des oberen Magnetkopfes 12 so weit reduziert, bis über die entsprechenden magnetischen Rückwirkungen mittels des Hallelements 6 eine Strömungsgeschwindigkeit gemessen wird, die gleich der voreingestellten Gießgeschwindigkeit ist. Somit läßt sich der Übergang vom flüssigen, turbulenten Bereich der Metallschmelze 3 in den erstarrten Zustand bestimmen und bei entsprechender Kalibrierung mittels der Auswerteeinheit 16 ein Maß für die Strangschale 19 bzw. das Strangschalenwachstum ableiten.

Wird analog zu der vorstehend beschriebenen Messung auch die Feldstärke des unteren Magnetkopfes 13 so weit reduziert, bis über die entsprechenden magnetischen Rückwirkungen mittels des Hallelementes 7 eine Strömungsgeschwindigkeit gemessen wird, die gleich der eingestellten Gießgeschwindigkeit ist, so entspricht die Differenz beider Messungen einem Maß für das Wachstum der Strangschale 19 zwischen dem oberen Magnetkopf 12 und dem unteren Magnetkopf 13.

## Patentansprüche

1. Verfahren zum Betreiben einer Meßeinrichtung zur Ermittlung der Strömung einer Metallschmelze in einer Kokille einer Stranggießanlage, umfassend an einer Stranggießkokillenwand angeordnete Magnete,
**dadurch gekennzeichnet,**
**daß** mindestens zwei in Strömungsrichtung (2) der Metallschmelze (3) im Abstand voneinander angeordnete fremderregte Elektromagnete (3, 4) mit unterschiedlicher Feldstärke erregt werden, wobei die jeweiligen magnetischen Rückwirkungen einer Auswerteeinheit (16) zugeführt werden, in der unter Differenzbildung die prozeßabhängigen Meßdaten ermittelt werden.

2. Verfahren nach Anspruch 1,
**dadurch gekennzeichnet,**
**daß** mit beliebig differierenden Feldstärken die meßbare Feldlinientiefe in der Metallschmelze (3) verändert und damit die in verschiedenen Meßtiefen jeweils unterschiedlich vorherrschende Strömung unter Ausschluß der in der Strangschale (19) bzw. in der Kokillenwand (1) induzierten Wirbelströme bestimmt wird.

3. Verfahren nach Anspruch 1,
**dadurch gekennzeichnet,**
**daß** die Erregung des oberen Elektromagneten (3) soweit verringert wird, bis nur noch eine Strömungsgeschwindigkeit gemessen wird, die gleich der Gießgeschwindigkeit ist.

4. Verfahren nach Anspruch 1,
**dadurch gekennzeichnet,**
**daß** die Erregung beider Elektromagnete (3, 4) verringert wird.

5. Vorrichtung zur Durchführung des Verfahrens nach Anspruch 1,
**dadurch gekennzeichnet,**
**daß** die Elektromagnete (3, 4) mit unterschiedlicher und veränderlicher Feldstärke erregt sind.

6. Vorrichtung nach Anspruch 5,
**dadurch gekennzeichnet,**
**daß** an jedem Elektromagnet (3, 4) ein Hallelement (6, 7) angeordnet ist.

7. Vorrichtung nach Anspruch 5 oder 6,
**dadurch gekennzeichnet,**
**daß** die Elektromagnete (3, 4) zu einem Meßkopf zusammengefaßt sind.
